# EUROPEAN PATENT SPECIFICATION

(11) **EP 3 758 215 B1**
(45) Date of publication and mention of the grant of the patent: **22.10.2025**
(21) Application number: 20181141.1
(22) Date of filing: 19.06.2020
(51) Int. Cl.: H02P 9/08, H02K 55/00, H02K 55/04, H02K 21/04

(54) **HYBRID WOUND-ROTOR MOTOR AND GENERATOR WITH INDUCTION FEED AND PERSISTENT CURRENT**
HYBRIDMOTOR MIT GEWICKELTEM LÄUFER UND GENERATOR MIT INDUKTIONSSPEISUNG UND DAUERSTROM
MOTEUR ET GÉNÉRATEUR HYBRIDES À ROTOR BOBINÉ À ALIMENTATION PAR INDUCTION ET COURANT PERSISTANT

(30) Priority: 27.06.2019 US 201916455471; 27.06.2019 US 201916455536
(43) Date of publication of application: 30.12.2020
(73) Proprietor: The Boeing Company, Arlington, VA 22202 (US)
(72) Inventor: HULL, John R., Chicago, IL 60606 (US); LIU, Shengyi, Chicago, IL 60606 (US)
(74) Representative: Sandri, Sandro

(56) References cited:
- EP-A1- 0 508 936
- EP-A2- 2 001 121
- EP-A2- 2 523 322
- WO-A2-2013/012823
- KR-A- 20170 050 551
- US-A1- 2003 052 568
- COOMBS T A ET AL: "The Next Generation of Superconducting Permanent Magnets: The Flux Pumping Method", IEEE TRANSACTIONS ON APPLIED SUPERCONDUCTIVITY, IEEE SERVICE CENTER, LOS ALAMITOS, CA, US, vol. 19, no. 3, 1 June 2009 (2009-06-01), pages 2169 - 2173, XP011263147, ISSN: 1051-8223
- RONGHAI QU ET AL: "Review of Superconducting Generator Topologies for Direct-Drive Wind Turbines", IEEE TRANSACTIONS ON APPLIED SUPERCONDUCTIVITY, IEEE SERVICE CENTER, LOS ALAMITOS, CA, US, vol. 23, no. 3, 1 June 2013 (2013-06-01), pages 5201108, XP011513658, ISSN: 1051-8223, DOI: 10.1109/TASC.2013.2241387
- CESAR A LUONGO ET AL: "Next Generation More-Electric Aircraft: A Potential Application for HTS Superconductors", IEEE TRANSACTIONS ON APPLIED SUPERCONDUCTIVITY, IEEE SERVICE CENTER, LOS ALAMITOS, CA, US, vol. 19, no. 3, 1 June 2009 (2009-06-01), pages 1055 - 1068, XP011263653, ISSN: 1051-8223

## Description

### BACKGROUND

The present disclosure relates to rotor motor/generators. In particular, the present disclosure relates to a hybrid wound-rotor motor/generator with induction feed and persistent current. In the effort to increase use of electrical propulsion in aircraft, there is a continued desire to develop technology that has a higher specific power. Examples include high power density electric motors and generators (M/Gs) and power conversion equipment.

Superconducting windings in a motor/generator (M/G) are often desired to achieve high specific power. The current density in a superconductor is much larger than that of a conventional conductor, such as copper or aluminum, and the power is generally a function of the current in the rotor and the current in the stator windings. Superconducting windings are typically implemented in the rotor, which sees a mostly constant magnetic field and, therefore, has low losses. Since the superconductors require cryogenic temperatures to remain in their superconducting state, any losses require a cooling device, such as a cryocooler to remove the heat. However, if the losses are very high, the weight of the cryocooler offsets the weight advantage of the superconducting device.

Typically, the stator windings for these superconducting M/Gs are conventional conductors, where the stator sees a substantial changing magnetic field. In most designs, the losses due to these changes are too high with present day superconductors to include them in the stator windings.

Currently, one method of establishing current in a wound rotor is through the use of brushes. In addition to the maintenance problem due to wear on the brushes, the presence of a normal conductor running current into a superconducting winding introduces a substantial amount of heat to the system, which much be removed by a refrigeration system. This typically means the design must be composed of many turns, which produces a high inductance and low current.

One method to avoid the introduction of current into the rotor is to use superconductors in the form of bulk trapped-flux magnets, analogous to power permanent magnets. This concept is problematic because it is difficult to energize the superconductors in-situ. Further, it is difficult to turn off the magnetization in a short time. So, if there is a short circuit in the stator windings, the magnetic field from the rotor will continue to impress a voltage across these coils, and there is the danger that the stator windings will overheat and possibly catch on fire.

An alternative method is to use induction to energize the rotor windings. However, the changing field that the superconductors see induces large losses, which makes the cooling system too heavy.

Document EP 2001121 A2 discloses an engine start system with quadrature AC excitation, in which the starter-generator system is used to supply sufficient starting torque to start an aircraft main engine. The main starter-generator stator winding is connected to a constant frequency power source to create a rotating field in the main starter-generator air gap. This rotating field, in turn, induces current on the main rotor winding, which may be a closed circuit formed by main rotor field winding and exciter armature winding. The interaction between the main rotor current and the air gap flux gives rise to the starting torque to start the main engine. Adjusting the voltage supplied to the exciter stator field winding can modify the induced voltage and current on the rotor circuit to control the rotor current and starting torque.

Article COOMBS T A ET AL: "The Next Generation of Superconducting Permanent Magnets: The Flux Pumping Method", IEEE TRANSACTIONS ON APPLIED SUPERCONDUCTIVITY, IEEE SERVICE CENTER, LOS ALAMITOS; CA, US, vol. 23, no. 3, 1 June 2013, page 5201108, XP011513658, ISSN: 1051-8223, DOI: 10.1109/TASC.2013.2241387 discloses an experimental use of sections of bulk YBCO (Yttrium barium copper oxide) and gadolinium placed inside a circular iron can forming a magnetic circuit. Heaters placed around the gadolinium are used to apply pulses of heat to the gadolinium, while the YBCO is cooled with liquid nitrogen, whereby a flux of traveling magnetic waves is generated which moves across the superconductor.

In light of the foregoing, there is a need for an improved high power density electric M/G design.

### SUMMARY

The present disclosure relates to a method for carrying out operation of a hybrid wound-rotor motor/generator operating in a generator mode disclosed at claim 1 and in motor mode disclosed at claim 12.

In one or more examples, the controlling current controls the non-superconducting coil to one of: reinforce a voltage produced in the main stator coil by the superconducting coil, suppress the voltage produced in the main stator coil by the superconducting coil, or change a phase of the voltage produced in the main stator coil by the superconducting coil.

In at least one example, the method further comprises detecting a short circuit in the main stator coil. Also, the method comprises inducing, by the control stator coil, the controlling current into the non-superconducting coil such that flux from the non-superconducting coil entering into a shorted part of the main stator coil is opposite to flux from the superconducting coil entering into the shorted part of the main stator coil. Further, the method comprises simultaneously decreasing, by the flux pump, the persistent current in the superconducting coil until the persistent current in the superconducting coil is reduced to zero, and adjusting the controlling current in the control stator coil to continue to null out the flux from the superconducting coil entering into the shorted part of the main stator coil.

In one or more examples, the superconducting coil is located in a cold part of the rotor and the non-superconducting coil is located in a warm part of the rotor. In some examples, the cold part of the rotor and the warm part of the rotor are separated by an insulating partition.

In at least one example, the rotor comprises an outer mechanical shell and an inner mechanical shell, and where a cooling gas from the cryocooler flows in a space formed between the outer mechanical shell and the inner mechanical shell.

The features, functions, and advantages can be achieved independently in various examples of the present disclosure or may be combined in yet other examples.

### DRAWINGS

These and other features, aspects, and advantages of the present disclosure will become better understood with regard to the following description, appended claims, and accompanying drawings where:
FIG. 1 is a diagram showing the disclosed system for a hybrid wound-rotor motor/generator (M/G) operating in a motor mode, where the associated cryocooler is stationary, in accordance with at least one example of the present disclosure.
FIG. 2 is a diagram showing the disclosed system for a hybrid wound-rotor motor/generator (M/G) operating in a generator mode, where the associated cryocooler is stationary, in accordance with at least one example of the present disclosure.
FIG. 3 is a diagram showing the disclosed system for a hybrid wound-rotor motor/generator (M/G), where the associated cryocooler is located on the rotor, in accordance with at least one example of the present disclosure.
FIGS. 4A and 4B together are a flow chart showing the disclosed method for operation of the disclosed hybrid wound-rotor motor/generator (M/G) in a generator mode, in accordance with at least one example of the present disclosure.
FIGS. 5A and 5B together are a flow chart showing the disclosed method for operation of the disclosed hybrid wound-rotor motor/generator (M/G) in a motor mode, in accordance with at least one example of the present disclosure.
FIG. 6 is a flow chart showing the disclosed method for stator-coil short circuit operation of the disclosed hybrid wound-rotor motor/generator (M/G), in accordance with at least one example of the present disclosure.

### DESCRIPTION

The methods and apparatus disclosed herein provide an operative system for a hybrid wound-rotor motor/generator with induction feed and persistent current. In one or more examples, the system of the present disclosure provides a brushless motor/generator (M/G) that uses a wound rotor consisting of a hybrid induction-fed component and a persistent-current superconducting component to achieve high specific power and speed control. The persistent current is achieved with a magnetic flux pump. Additional advantages of the concept are a low-inductance, high-current rotor that is easy to de-energize in case of a stator short, and the ability to decrease the voltage on the shorted stator during de-energizing of the rotor.

The system of the present disclosure employs a wound rotor that is superconducting. Brushes are avoided by energizing the windings with a magnetic flux pump, which is a noncontact controlled method of inducing current into the windings. Since this will occur on initial energizing of the M/G and occurs only over a limited part of the windings, it does not suffer from the extended heating that a conventional induction process does. It should be noted that the flux pump can be operated in reverse to relatively quickly de-energize the rotor windings. This allows the design to have a low-inductance, high-current rotor, without the attendant heat load that a brushed system would have.

The rotor also uses conventional non-superconducting windings in an induction mode. The magnetic field from these induction-fed coils is linked with the magnetic field from the superconducting windings into the stator coils. Under normal operation, these coils can act in tandem with the superconducting windings to increase the power of the M/G. If a short circuit in the stator windings occurs, these coils can act in opposition to the superconducting coils to cancel out all or part of the magnetic field going into the stator to avoid any safety issue.

In addition to the abovementioned advantages, the hybrid rotor scheme also has the ability to control the output of the M/G to match the load requirements under varying input conditions. In generator mode, if there is a variable speed in the mechanical shaft turning the rotor, the induction part of the system can be used to maintain a constant frequency output. In motor mode, the induction part of the system can be used to better regulate the changing speed requirements. These advantages are similar to those of a doubly-fed induction motor.

In the following description, numerous details are set forth in order to provide a more thorough description of the system. It will be apparent, however, to one skilled in the art, that the disclosed system may be practiced without these specific details. In the other instances, well known features have not been described in detail, so as not to unnecessarily obscure the system.

Examples of the present disclosure may be described herein in terms of functional and/or logical components and various processing steps. It should be appreciated that such components may be realized by any number of hardware, software, and/or firmware components configured to perform the specified functions. For example, an example of the present disclosure may employ various integrated circuit components (e.g., memory elements, digital signal processing elements, logic elements, look-up tables, or the like), which may carry out a variety of functions under the control of one or more processors, microprocessors, or other control devices. In addition, those skilled in the art will appreciate that examples of the present disclosure may be practiced in conjunction with other components, and that the systems described herein are merely examples of the present disclosure.

For the sake of brevity, conventional techniques and components related to rotor motor/generators (M/Gs), and other functional aspects of the system (and the individual operating components of the systems) may not be described in detail herein. Most motor/generators (M/Gs) have three (3) or more electrical phases. In the disclosed systems of the present disclosure, only one electrical phase is shown. However, the disclosed systems may have more than one electrical phase. Furthermore, the connecting lines shown in the various figures contained herein are intended to represent example functional relationships and/or physical couplings between the various elements. It should be noted that many alternative or additional functional relationships or physical connections may be present in one or more examples of the present disclosure.

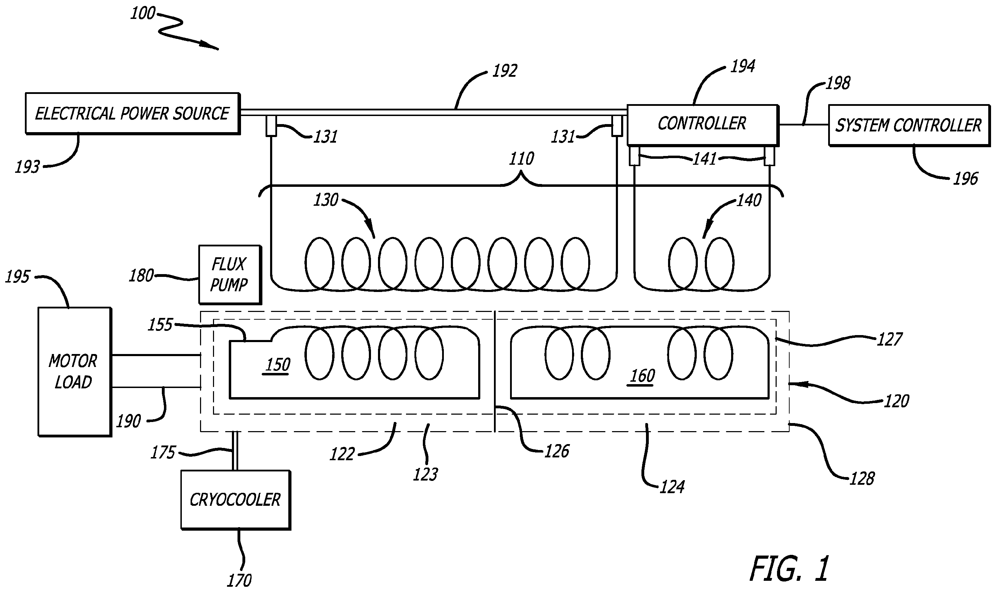

FIG. 1 is a diagram showing the disclosed system (or device) 100 for a hybrid wound-rotor motor/generator (M/G) operating in a motor mode, where the associated cryocooler 170 is stationary, in accordance with at least one example of the present disclosure. In particular, the basic configuration for the system 100 is shown schematically in FIG. 1. Most motor/generators (M/Gs) have multiple modes of operation. In FIG. 1, the disclosed system 100 is operating in a motor mode to rotate a rotor 120.

In FIG. 1, system 100 comprises a stator 110 and the rotor 120. The stator 110 comprises a main stator coil 130 and a control stator coil 140. The rotor 120 comprises a persistent-current superconducting coil 150 and a non-superconducting coil 160. The superconducting coil 150 interacts only with the main stator coil 130. The control stator coil 140 interacts only with the non-superconducting coil 160. The non-superconducting coil 160 interacts with both stator coils (i.e. the main stator coil 130 and the control stator coil 140). And, the main stator coil 130 interacts with both rotor coils (i.e. the superconducting coil 150 and the non-superconducting coil 160).

The rotor 120 is divided into two parts: a cold part 123 and a warm part 124. The two parts are separated by an insulating partition 126. The superconducting coil 150 is located in the cold part 123 of the rotor 120, and the non-superconducting coil 160 is located in the warm part 124 of the rotor 120.

The rotor 120 also comprises an inner mechanical shell 127 that supports the rotor coils (i.e. the superconducting coil 150 and the non-superconducting coil 160). In addition, the rotor 120 comprises an outer mechanical shell 128, that together with the inner mechanical shell 127, forms a space 122, which a cooling gas may flow into or out of from passage 175, which is connected to the cryocooler 170.

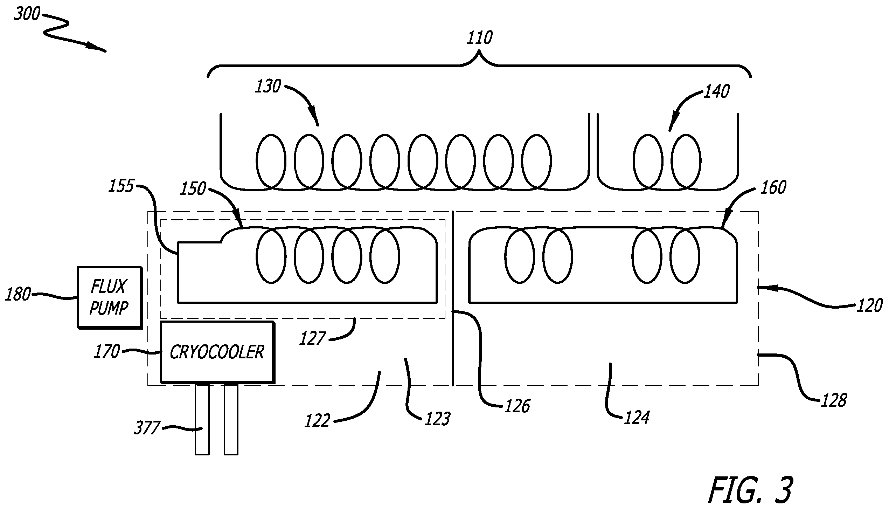

In the configuration of FIG. 1, the cryocooler 170 is stationary. For convenience (e.g., for ease of illustration), passage 175 is shown in FIG. 1 to connect to the rotor 120 on the outer radius, but passage 175 would preferably connect along the rotational axis of the rotor 120. The cryocooler 170 may be powered by inductive power transfer. In other examples, when the cryocooler 170 is located on the rotor 120 (refer to FIG. 3), the cryocooler 170 may be powered by slip rings 377.

It should be noted that additional motor/generator components, such as support bearings, coil bobbins, cooling of the stator coil, etc., are not shown in FIG. 1. In addition, it should be noted that the inner shell 127 and the outer shell 128 may be mechanically connected by other components besides the insulating partition 126 as shown.

Superconducting coil 150 comprises a segment 155 that interacts with a flux pump 180 to induce a persistent current into superconducting coil 150. The main electrical interaction is between superconducting coil 150 and main stator coil 130. When the superconducting coil 150 electrically interacts with the main stator coil 130, the superconducting coil 150 acts as a constant source of magnetic flux. The superconducting coil 150 interacts mostly synchronously (or asynchronously) with the main stator coil 130.

The control stator coil 140 induces current into non-superconducting coil 160 in such a way that the non-superconducting coil 160 either acts to reinforce the voltage produced in main stator coil 130 by superconducting coil 150 or may act against it, or may act to change the effective phase of the interaction. As such, the controlling current controls the non-superconducting coil 160 to one of: reinforce a voltage produced in the main stator coil 130 by the superconducting coil 150, suppress the voltage produced in the main stator coil 130 by the superconducting coil 150, or change a phase of the voltage produced in the main stator coil 130 by the superconducting coil 150.

In one or more examples, the stator coils (i.e. main stator coil 130 and control stator coil 140) may be superconducting or non-superconducting.

In FIG. 1, the flux pump 180 is shown located axially of the rotor 120. In a separate example of the invention (refer to FIG. 3), the flux pump 180 is located radially of the rotor 120.

In addition, in FIG. 1, a motor load (e.g., a propeller) 195 is shown to be connected to the rotor 120 via a shaft 190. During operation of the system 100 in motor mode, the rotor rotates to drive the motor load 195.

Also shown in FIG. 1, the main stator coil 130 is connected via main stator coil terminals 131 to an external power distribution bus 192. An electrical power source 193 delivers power to the power distribution bus 192. In addition, the control stator coil 140 is connected via control stator coil terminals 141 to a controller 194. A system controller 196 is connected to the controller 194, and sends at least one control signal 198 to control the control stator coil 140.

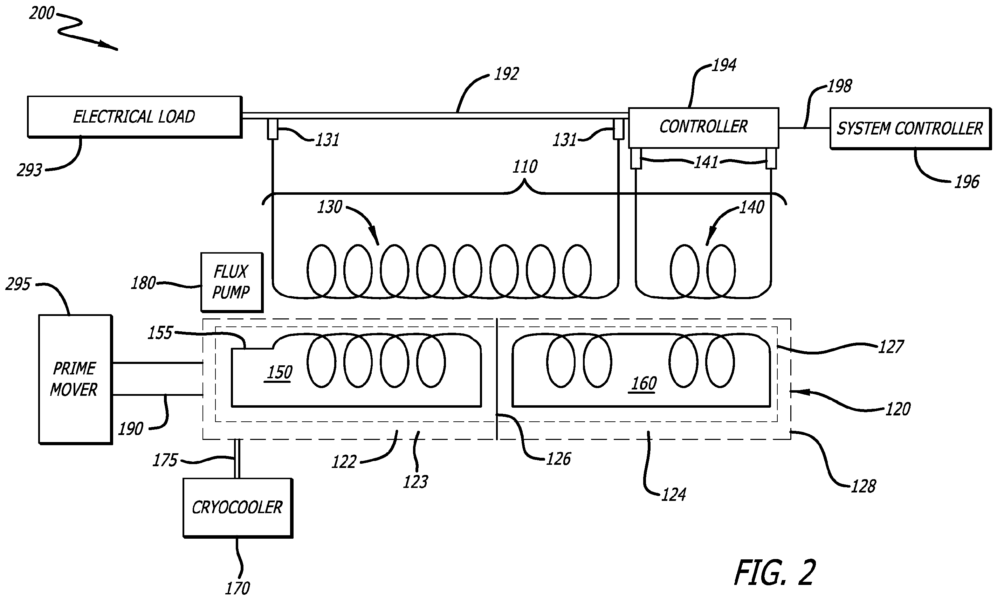

FIG. 2 is a diagram showing the disclosed system (or device) 200 for a hybrid wound-rotor motor/generator (M/G) operating in a generator mode, where (similar to FIG. 1) the associated cryocooler 170 is stationary, in accordance with at least one example of the present disclosure. Most of the components of the system 200 of FIG. 2 are the same as the components of the system 100 of FIG. 1, which shows the basic configuration. In FIG. 2, the disclosed system 200 is operating in a generator mode to produce an output voltage.

In FIG. 2, a prime mover 295 is shown to be connected to the rotor 120 via the shaft 190. During operation of the system 200 in generator mode, the shaft 190 of the prime mover 295 delivers torque to rotate the rotor 120. The output voltage produced is outputted at the main stator coil terminals 131. The main stator coil 130 is connected to (via the main stator coil terminals 131) and delivers power to the power distribution bus 192. The power distribution bus 192 is connected to an electrical load 293, which receives the power.

FIG. 3 is a diagram showing the disclosed system (or device) 300 for a hybrid wound-rotor motor/generator (M/G), where the associated cryocooler 170 is located on the rotor 120, in accordance with at least one example of the present disclosure. For convenience (e.g., for ease of illustration), not all of the components of the disclosed system 300 are illustrated in FIG. 3. Refer to FIGS. 1 and 2 to view all of the components of the system 300.

In particular, FIG. 3 shows another example of the disclosed system 300, in which for system 300, the cryocooler 170 is located on the rotor 120. In addition, the example of FIG. 3 also shows the flux pump 180 located radially of the rotor 120.

In this configuration, the cryocooler 170 may conductively cool the superconducting coil 150. In this case, the cryocooler 170 is powered by slip rings 377. Alternatively, as previously mentioned above, the cryocooler 170 may be powered by inductive power transfer, similar to the charging of electric cars.

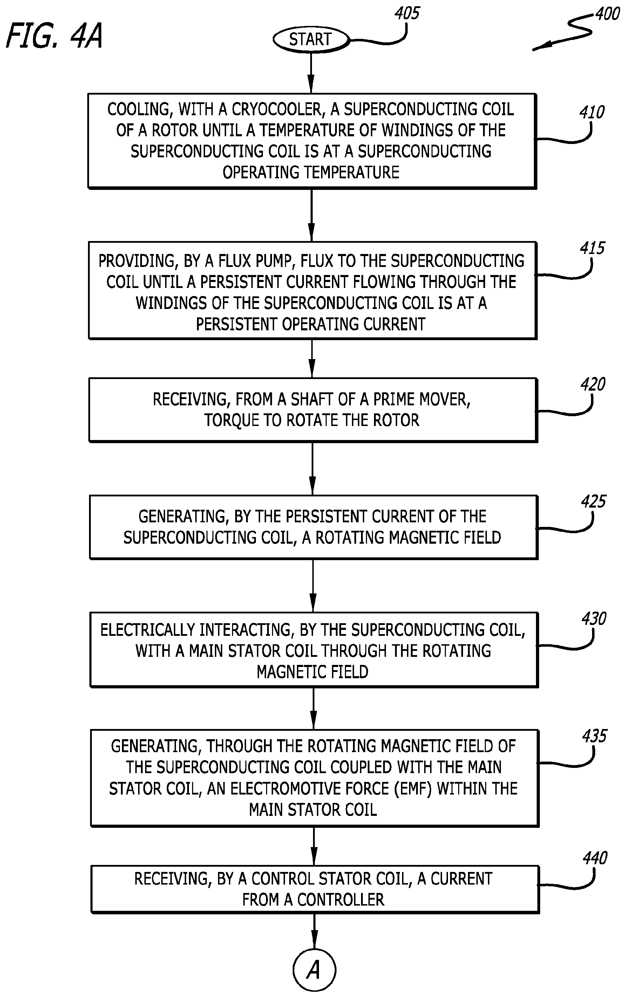

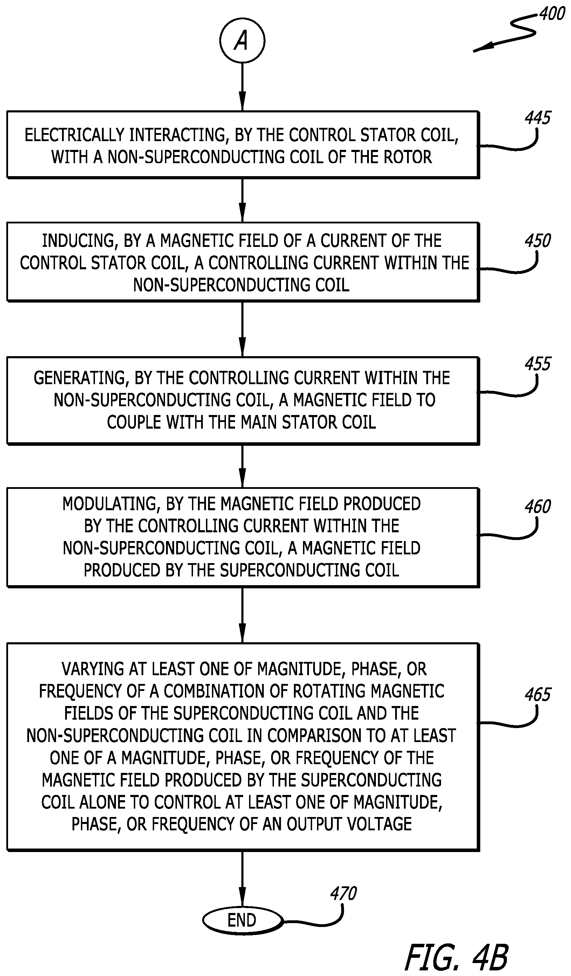

FIGS. 4A and 4B together are a flow chart showing the disclosed method 400 for operation of the disclosed hybrid wound-rotor motor/generator (M/G) (e.g., system (or device) 200 of FIG. 2) in a generator mode, in accordance with at least one example of the present disclosure. When operating in a generator mode, the disclosed hybrid wound-rotor motor/generator (M/G) operates as a generator to produce an output voltage. For the method of FIGS. 4A and 4B, refer to the components shown in FIG. 2.

At the start 405 of the method, at step 410, a cryocooler 170 cools a superconducting coil 150 of a rotor 120 until a temperature of the windings of the superconducting coil 150 is at a superconducting operating temperature (e.g., a predetermined operating temperature for the superconducting coil 150). At step 415, a flux pump 180 provides flux to the superconducting coil 150 until a persistent current flowing through the windings of the superconducting coil 150 is at a persistent operating current (e.g., a predetermined persistent operating current). At step 420, a shaft 190 of a prime mover 295 receives torque to rotate the rotor 120.

At step 425, the persistent current of the superconducting coil 150 generates a rotating magnetic field. At step 430, the superconducting coil 150 electrically interacts with a main stator coil 130 through the rotating magnetic field. At step 435, the rotating magnetic field of the superconducting coil 150 coupled with the main stator coil 130 generates an electromotive force (EMF) within the main stator coil 130.

At step 440, a control stator coil 140 receives a current from a controller 194. At step 445, the control stator coil 140 electrically interacts with a non-superconducting coil 160 of the rotor 120. At step 450, a magnetic field of a current of the control stator coil 140 induces a controlling current within the non-superconducting coil 160. At step 455, the controlling current within the non-superconducting coil 160 generates a magnetic field to couple with the main stator coil 130. At step 460, the magnetic field produced by the controlling current within the non-superconducting coil 160 modulates a magnetic field produced by the superconducting coil 150.

At step 465, at least one of a magnitude, phase, or frequency of a combination of rotating magnetic fields of the superconducting coil 150 and the non-superconducting coil 160 is varied in comparison to at least one of a magnitude, phase, or frequency of the magnetic field produced by the superconducting coil 150 alone to control at least one of magnitude, phase, or frequency of an output voltage. Then, the method ends at 470.

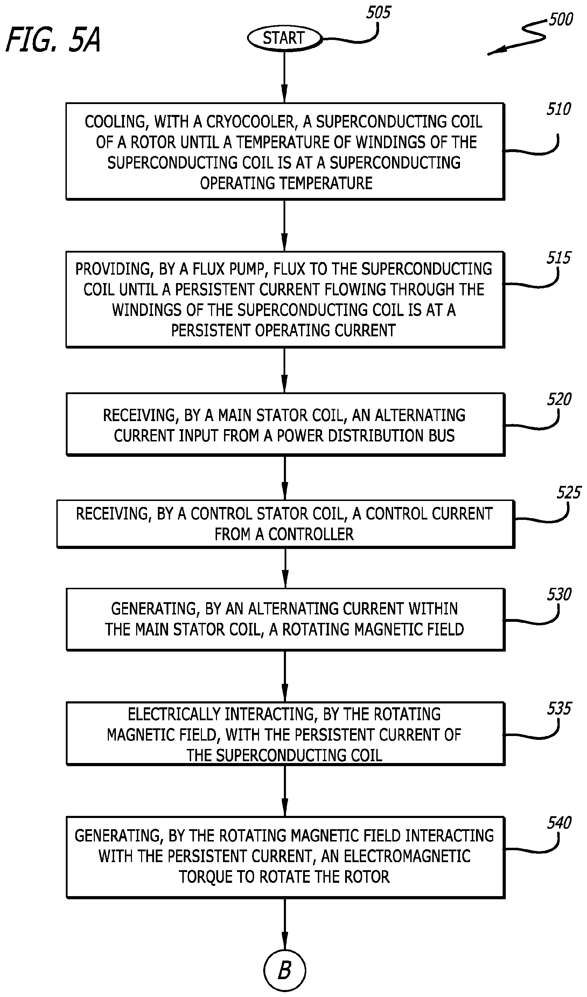

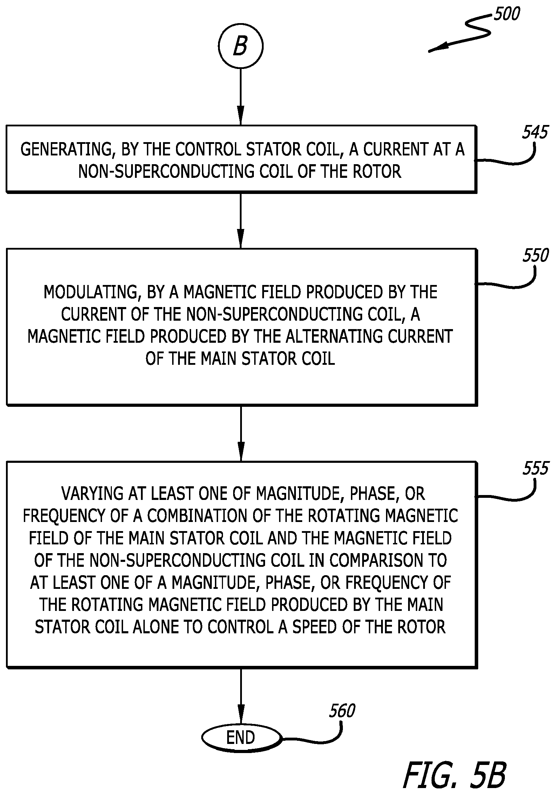

FIGS. 5A and 5B together are a flow chart showing the disclosed method 500 for operation of the disclosed hybrid wound-rotor motor/generator (M/G) (e.g., system (or device) 100 of FIG. 1) in a motor mode, in accordance with at least one example of the present disclosure. When operating in a motor mode, the disclosed hybrid wound-rotor motor/generator (M/G) operates as a motor to rotate the rotor 120. For the method of FIGS. 5A and 5B, refer to the components shown in FIG. 1.

At the start 505 of the method, at step 510, a cryocooler 170 cools a superconducting coil 150 of a rotor 120 until a temperature of windings of the superconducting coil 150 is at a superconducting operating temperature (e.g., a predetermined operating temperature). At step 515, a flux pump 180 provides flux to the superconducting coil 150 until a persistent current flowing through the windings of the superconducting coil 150 is at a persistent operating current.

At step 520, a main stator coil 130 receives an alternating current (AC) input from a power distribution bus 192. At step 525, a control stator coil 140 receives a control current from a controller 194. At step 530, an alternating current (AC) within the main stator coil 130 generates a rotating magnetic field. At step 535, the rotating magnetic field electrically interacts with the persistent current of the superconducting coil 150. At step 540, the rotating magnetic field interacting with the persistent current generates an electromagnetic torque to rotate the rotor 120.

At step 545, the control stator coil 140 generates a current at a non-superconducting coil 160 of the rotor 120. At step 550, a magnetic field produced by the current of the non-superconducting coil 160 modulates a magnetic field produced by the alternating current (AC) of the main stator coil 130. At step 555, at least one of a magnitude, phase, or frequency of a combination of the rotating magnetic field of the main stator coil 130 and the magnetic field of the non-superconducting coil 160 is varied in comparison to at least one of a magnitude, phase, or frequency of the rotating magnetic field produced by the main stator coil 130 alone to control a speed of the rotor 120. Then, the method ends at 560.

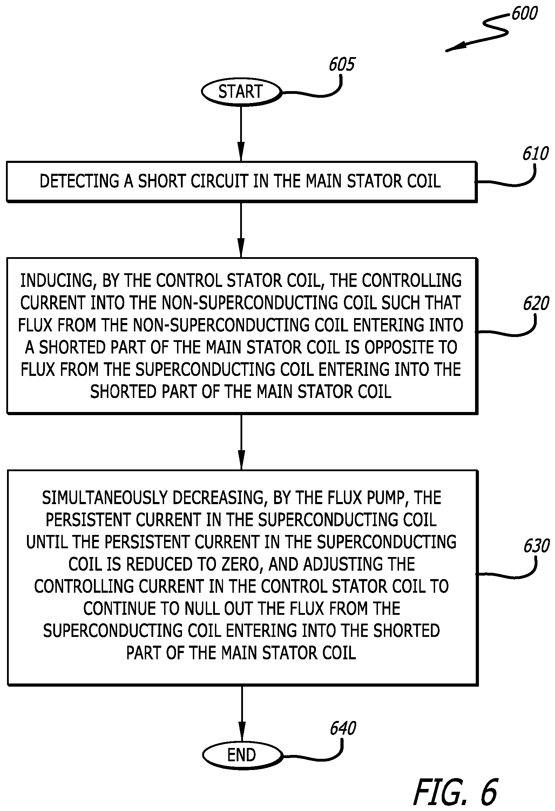

FIG. 6 is a flow chart showing the disclosed method 600 for stator-coil short circuit operation of the disclosed hybrid wound-rotor motor/generator (M/G) (e.g., systems (or devices) 100, 200 of FIGS. 1 and 2), in accordance with at least one example of the present disclosure. When the disclosed hybrid wound-rotor motor/generator (M/G) is operating in a motor mode or a generator mode, a short circuit may occur in the main stator coil 130. The method of FIG. 6 is utilized to null out the flux entering into the shorted part of the main stator coil 130. For the method of FIG. 6, refer to the components shown in FIGS. 1 and 2.

At the start 605 of the method, at step 610, a short circuit is detected in the main stator coil 130. At step 620, the control stator coil 140 induces the controlling current into the non-superconducting coil 160 such that flux from the non-superconducting coil 160 entering into the shorted part of the main stator coil 130 is opposite to flux from the superconducting coil 150 entering into the shorted part of the main stator coil 130. At step 630, the flux pump 180 simultaneously decreases the persistent current in the superconducting coil 150 until the persistent current in the superconducting coil 150 is reduced to zero, and during this time, the controlling current in the control stator coil 140 is adjusted to continue to null out the flux in the superconducting coil 150 entering into the shorted part of the main stator coil 130. Then, the method ends 640.

## Claims

1. A method (400) for operation of a hybrid wound-rotor motor/generator (M/G) device (200) operating in a generator mode, whereby the hybrid wound-rotor motor/generator (M/G) device (200) comprises a stator (110) having a main stator coil (130) and a control stator coil (140) connected to a controller (194), as well as a rotor (120) having a persistent-current superconducting coil (150) and a non-superconducting coil (160), the rotor (120) being divided into a cold part (123) and a warm part (124), the two parts being separated by an insulating partition (126), whereby the non-superconducting coil (160) of the rotor (120) interacts with the main stator coil (130) and the control stator coil (140) while the main stator coil (130) interacts with the superconducting coil (150) and the non-superconducting coil (160) of the rotor (120), further comprising a cryocooler (170) supplying a cooling gas to the cold part (123) of the rotor(120), further comprising a flux pump (180) inducing the persistent current into the super conducting coil (150) of the rotor (120),
the method (400) comprising:
cooling (410), with the cryocooler (170), the superconducting coil (150) of the rotor (120) until a temperature of windings of the superconducting coil (150) is at a superconducting operating temperature;
providing (415), by the flux pump (180), flux to the superconducting coil (150) until a persistent current flowing through the windings of the superconducting coil (150) is at a persistent operating current;
receiving (420), from a shaft (190) of a prime mover (295), torque to rotate the rotor (120);
generating (425), by the persistent current of the superconducting coil (150), a rotating magnetic field;
electrically interacting (430), by the superconducting coil (150), with the main stator coil (130) of the stator (110) through the rotating magnetic field;
generating (435), through the rotating magnetic field of the superconducting coil (150) of the rotor (120) coupled with the main stator coil (130), an electromotive force (EMF) within the main stator coil (130);
receiving (440), by the control stator coil (140) of the stator (110), a current from the controller (194);
electrically interacting (445), by the control stator coil (140), with the non-superconducting coil (160) of the rotor (120);
inducing (450), by a magnetic field of a current of the control stator coil (140), a controlling current within the non-superconducting coil (160) of the rotor (120);
generating (445), by the controlling current within the non-superconducting coil (160) of the rotor (120), a magnetic field to couple with the main stator coil (130);
modulating (460), by the magnetic field produced by the controlling current within the non-superconducting coil (160) of the rotor (120), a magnetic field produced by the superconducting coil (150) of the rotor (120);
varying (465) at least one of magnitude, phase, or frequency of a combination of rotating magnetic fields of the superconducting coil (150) and the non-superconducting coil (160) of the rotor (120) in comparison to at least one of a magnitude, phase, or frequency of the magnetic field produced by the superconducting coil (150) of the rotor (120) alone to control at least one of magnitude, phase, or frequency of an output voltage,
whereby a controlling current induced by the control stator coil (140) into the non-superconducting coil (160) of the rotor (120) controls the non-superconducting coil (150) to one of: reinforce a voltage produced in the main stator coil (130) by the superconducting coil (150) of the rotor (120), suppress the voltage produced in the main stator coil (130) by the superconducting coil (150) of the rotor (120), or change a phase of the voltage produced in the main stator coil (130) by the superconducting coil (150) of the rotor (120).

2. The method of claim 1, wherein the main stator coil (130) is connected to and delivers electric power to a power distribution bus (192).

3. The method of any of claims 1-2, wherein the control stator coil (140) receives at least one control signal (198) from a system controller (196).

4. The method of any of claims 1-3, wherein the output voltage is outputted at main stator coil terminals (131).

5. The method of any of claims 1-4, wherein when the superconducting coil (150) at least one of:
electrically interacts with the main stator coil (130), the superconducting coil (150) acts as a constant source of magnetic flux;
electrically interacts mostly synchronously with the main stator coil (130); and
electrically interacts asynchronously with the main stator coil (130).

6. The method of any of claims 1-5, wherein each of the main stator coil (130) and the control stator coil (140) is one of superconducting or non-superconducting.

7. The method of any of claims 1-6, wherein the flux pump (180) is located one of axially of the rotor (120) or radially of the rotor (120).

8. The method of any of claims 1-7, wherein the cryocooler (170) is one of located on the rotor (120) or is stationary.

9. The method of any of claims 1-8, wherein the method further comprises at least one of:
powering, by slip rings (377), the cryocooler (170), when the cryocooler (170) is located on the rotor (120); and
powering, by inductive power transfer, the cryocooler (170).

10. The method of any of claims 1-9, wherein the cooling gas flows to the cold part (123) of the rotor (120) that comprises the superconducting coil (150) via a passage (175), wherein the passage (175) connects from the cryocooler (170) to one of an outer radius of the rotor (120) or a rotational axis of the rotor (120).

11. The method of claim 1, further comprising detecting a short circuit in the main stator coil (130); inducing, by the control stator coil (140), the controlling current into the non-superconducting coil (160) of the rotor (120) such that flux from the non-superconducting coil (160) of the rotor (120) entering into a shorted part of the main stator coil (130) is opposite to flux from the superconducting coil (150) of the rotor (120) entering into the shorted part of the main stator coil (130); and simultaneously decreasing, by the flux pump (180), the persistent current in the superconducting coil (150) of the rotor (120) until the persistent current in the superconducting coil (150) of the rotor (120) is reduced to zero, and adjusting the controlling current in the control stator coil (140) to continue to null out the flux from the superconducting coil (150) of the rotor (120) entering into the shorted part of the main stator coil (130).

12. A method for operation of a hybrid wound-rotor motor/generator (M/G) device (100) operating in a motor mode,
whereby the hybrid wound-rotor motor/generator (M/G) device (100) comprises a stator (110) having a main stator coil (130) and a control stator coil (140) connected to a controller (194), as well as a rotor (120) having a persistent-current superconducting coil (150) and a non-superconducting coil (160), the rotor (120) being divided into a cold part (123) and a warm part (124), the two parts being separated by an insulating partition (126), whereby the non-superconducting coil (160) of the rotor (120) interacts with the main stator coil (130) and the control stator coil (140) while the main stator coil (130) interacts with the superconducting coil (150) and the non-superconducting coil (160) of the rotor (120), further comprising a cryocooler (170) supplying a cooling gas to the cold part (123) of the rotor(120), further comprising a flux pump (180) inducing the persistent current into the super conducting coil (150) of the rotor (120),
the method comprising:
cooling (510), with the cryocooler (170), the superconducting coil (150) of the rotor (120) until a temperature of windings of the superconducting coil (150) of the rotor (120) is at a superconducting operating temperature;
providing (515), by the flux pump (180), flux to the superconducting coil (150) until a persistent current flowing through the windings of the superconducting coil (150) of the rotor (120) is at a persistent operating current;
receiving (520), by the main stator coil (130), an alternating current input from a power distribution bus (192);
receiving (525), by the control stator coil (140), a control current from the controller (194);
generating (530), by an alternating current within the main stator coil (130), a rotating magnetic field;
electrically interacting (535), by the rotating magnetic field, with the persistent current of the superconducting coil (150) of the rotor (120);
generating (540), by the rotating magnetic field interacting with the persistent current, an electromagnetic torque to rotate the rotor (120);
generating (545), by the control stator coil (140), a current at the non-superconducting coil (160) of the rotor (120);
modulating (550), by a magnetic field produced by the current of the non-superconducting coil (160) of the rotor (120), a magnetic field produced by the alternating current of the main stator coil (130);
varying (555) at least one of magnitude, phase, or frequency of a combination of the rotating magnetic field of the main stator coil (130) and the magnetic field of the non-superconducting coil (160) of the rotor (120) in comparison to at least one of a magnitude, phase, or frequency of the rotating magnetic field produced by the main stator coil (130) alone to control a speed of the rotor (120),
whereby a controlling current induced by the control stator coil (140) into the non-superconducting coil (160) of the rotor (120) controls the non-superconducting coil (150) to one of: reinforce a voltage produced in the main stator coil (130) by the superconducting coil (150) of the rotor (120), suppress the voltage produced in the main stator coil (130) by the superconducting coil (150) of the rotor (120), or change a phase of the voltage produced in the main stator coil (130) by the superconducting coil (150) of the rotor (120).

13. The method of claim 12, wherein the main stator coil terminals of the main stator coil (130) are connected to the power distribution bus (192).

14. The method of any of claims 12-13, wherein the control stator coil terminals of the control stator coil (140) are connected to the controller (194).

15. The method of claim 12, further comprising detecting a short circuit in the main stator coil (130); inducing, by the control stator coil (140), the controlling current into the non-superconducting coil (160) of the rotor (120) such that flux from the non-superconducting coil (160) of the rotor (120) entering into a shorted part of the main stator coil (130) is opposite to flux from the superconducting coil (150) of the rotor (120) entering into the shorted part of the main stator coil (130); and simultaneously decreasing, by the flux pump (180), the persistent current in the superconducting coil (150) of the rotor (120) until the persistent current in the superconducting coil (150) of the rotor (120) is reduced to zero, and adjusting the controlling current in the control stator coil (140) to continue to null out the flux from the superconducting coil (150) of the rotor (120) entering into the shorted part of the main stator coil (130).

## Patentansprüche

1. Verfahren (400) zum Betrieb einer Hybridwicklungsläufer-Motor/Generator-(M/G)-Einrichtung (200) im Generatorbetrieb, wobei die Hybridwicklungsläufer-Motor/Generator-(M/G)-Einrichtung (200) einen Stator (110) aufweist, der eine Hauptstatorspule (130) und eine Steuerstatorspule (140) aufweist, die mit einer Steuerung (194) verbunden sind, sowie einen Rotor (120), der eine Supraleiterspule (150) mit Dauerstrom und eine nichtsupraleitende Spule (160) aufweist, wobei der Rotor (120) in einen kalten Teil (123) und einen warmen Teil (124) unterteilt ist, wobei die beiden Teile durch eine Isoliertrennwand (126) getrennt sind, wobei die nichtsupraleitende Spule (160) des Rotors (120) mit der Hauptstatorspule (130) und der Steuerstatorspule (140) wechselwirkt, während die Hauptstatorspule (130) mit der Supraleiterspule (150) und der nichtsupraleitenden Spule (160) des Rotors (120) wechselwirkt, des Weiteren aufweisend einen Kryokühler (170), der ein Kühlgas zu dem kalten Teil (123) des Rotors (120) liefert, des Weiteren aufweisend eine Flusspumpe (180), die den Dauerstrom in die Supraleiterspule (150) des Rotors (120) induziert,
wobei das Verfahren (400) Folgendes aufweist:
Kühlen (410) der Supraleiterspule (150) des Rotors (120) mit dem Kryokühler (170), bis eine Temperatur der Wicklungen der Supraleiterspule (150) eine supraleitende Betriebstemperatur erreicht;
Bereitstellen (415) eines Flusses zu der Supraleiterspule (150) durch die Flusspumpe (180), bis ein Dauerstrom, der durch die Wicklungen der Supraleiterspule (150) fließt, einen Dauerbetriebsstrom erreicht;
Empfangen (420) eines Drehmoments von einer Welle (190) einer Antriebsmaschine (295), um den Rotor (120) zu drehen;
Erzeugen (425) eines rotierenden Magnetfelds durch den Dauerstrom der Supraleiterspule (150);
Elektrisches Wechselwirken (430) der Supraleiterspule (150) mit der Hauptstatorspule (130) des Stators (110) durch das rotierende Magnetfeld;
Erzeugen (435) einer elektromotorischen Kraft (EMK) innerhalb der Hauptstatorspule (130) durch das rotierende Magnetfeld der Supraleiterspule (150) des Rotors (120) in Verbindung mit der Hauptstatorspule (130);
Empfangen (440) eines Stroms durch die Steuerstatorspule (140) des Stators (110) von der Steuerung (194);
Elektrisches Wechselwirken (445) der Steuerstatorspule (140) mit der nichtsupraleitenden Spule (160) des Rotors (120);
Induzieren (450) eines Steuerstroms innerhalb der nichtsupraleitenden Spule (160) des Rotors (120) durch ein Magnetfeld eines Stroms der Steuerstatorspule (140);
Erzeugen (455) eines Magnetfelds durch den Steuerstrom innerhalb der nichtsupraleitenden Spule (160) des Rotors (120), um mit der Hauptstatorspule (130) zu koppeln;
Modulieren (460) eines Magnetfelds, das durch den Steuerstrom innerhalb der nichtsupraleitenden Spule (160) des Rotors (120) erzeugt wird, mit einem Magnetfeld, das durch die Supraleiterspule (150) des Rotors (120) erzeugt wird;
Variieren (465) von zumindest einem von Betrag, Phase oder Frequenz einer Kombination rotierender Magnetfelder der Supraleiterspule (150) und der nichtsupraleitenden Spule (160) des Rotors (120) im Vergleich zu zumindest einem von Betrag, Phase oder Frequenz des durch die Supraleiterspule (150) des Rotors (120) allein erzeugten Magnetfelds zur Steuerung von zumindest einem von Betrag, Phase oder Frequenz einer Ausgangsspannung,
wobei ein von der Steuerstatorspule (140) in die nichtsupraleitende Spule (160) des Rotors (120) induzierter Steuerstrom die nichtsupraleitende Spule (150) steuert, um eine von folgenden Wirkungen zu erzielen: Verstärken einer durch die Supraleiterspule (150) des Rotors (120) in der Hauptstatorspule (130) erzeugten Spannung, Unterdrücken der durch die Supraleiterspule (150) des Rotors (120) in der Hauptstatorspule (130) erzeugten Spannung oder Ändern einer Phase der durch die Supraleiterspule (150) des Rotors (120) in der Hauptstatorspule (130) erzeugten Spannung.

2. Verfahren nach Anspruch 1, wobei die Hauptstatorspule (130) mit einer Leistungsverteilungsbusleitung (192) verbunden ist und elektrische Leistung zu dieser liefert.

3. Verfahren nach einem der Ansprüche 1 bis 2, wobei die Steuerstatorspule (140) mindestens ein Steuersignal (198) von einer Systemsteuerung (196) empfängt.

4. Verfahren nach einem der Ansprüche 1 bis 3, wobei die Ausgangsspannung an Hauptstatorspulenanschlüssen (131) ausgegeben wird.

5. Verfahren nach einem der Ansprüche 1 bis 4, wobei, wenn die Supraleiterspule (150) zumindest eines von:
elektrisch mit der Hauptstatorspule (130) wechselwirkt, die Supraleiterspule (150) als konstante Quelle eines magnetischen Flusses wirkt;
elektrisch überwiegend synchron mit der Hauptstatorspule (130) wechselwirkt; und elektrisch asynchron mit der Hauptstatorspule (130) wechselwirkt.

6. Verfahren nach einem der Ansprüche 1 bis 5, wobei sowohl die Hauptstatorspule (130) als auch die Steuerstatorspule (140) jeweils entweder supraleitend oder nichtsupraleitend sind.

7. Verfahren nach einem der Ansprüche 1 bis 6, wobei sich die Flusspumpe (180) entweder axial zu dem Rotor (120) oder radial zu dem Rotor (120) befindet.

8. Verfahren nach einem der Ansprüche 1 bis 7, wobei sich der Kryokühler (170) entweder auf dem Rotor (120) befindet oder stationär ist.

9. Verfahren nach einem der Ansprüche 1 bis 8, wobei das Verfahren des Weiteren mindestens eines aufweist von:
Versorgen des Kryokühlers (170) durch Schleifringe (377), wenn sich der Kryokühler (170) auf dem Rotor (120) befindet; und
Versorgen des Kryokühlers (170) durch induktive Leistungsübertragung.

10. Verfahren nach einem der Ansprüche 1 bis 9, wobei das Kühlgas zu dem kalten Teil (123) des Rotors (120) strömt, der die Supraleiterspule (150) aufweist, über einen Kanal (175), wobei der Kanal (175) von dem Kryokühler (170) zu einem äußeren Radius des Rotors (120) oder zu einer Rotationsachse des Rotors (120) führt.

11. Verfahren nach Anspruch 1, des Weiteren aufweisend: Erkennen eines Kurzschlusses in der Hauptstatorspule (130); Induzieren eines Steuerstroms durch die Steuerstatorspule (140) in die nichtsupraleitende Spule (160) des Rotors (120) derart, dass der Fluss von der nichtsupraleitenden Spule (160) des Rotors (120), der in einen kurzgeschlossenen Teil der Hauptstatorspule (130) eintritt, entgegengesetzt zu dem Fluss von der Supraleiterspule (150) des Rotors (120) ist, der in den kurzgeschlossenen Teil der Hauptstatorspule (130) eintritt; und gleichzeitiges Verringern des Dauerstroms in der Supraleiterspule (150) des Rotors (120) durch die Flusspumpe (180), bis der Dauerstrom in der Supraleiterspule (150) des Rotors (120) auf null reduziert ist, und Anpassen des Steuerstroms in der Steuerstatorspule (140), um weiterhin den Fluss von der Supraleiterspule (150) des Rotors (120), der in den kurzgeschlossenen Teil der Hauptstatorspule (130) eintritt, aufzuheben.

12. Verfahren zum Betrieb einer Hybridwicklungsläufer-Motor/Generator-(M/G)-Einrichtung (100) im Motorbetrieb,
wobei die Hybridwicklungsläufer-Motor/Generator-(M/G)-Einrichtung (100) einen Stator (110) aufweist, der eine Hauptstatorspule (130) und eine Steuerstatorspule (140) aufweist, die mit einer Steuerung (194) verbunden sind, sowie einen Rotor (120), der eine Supraleiterspule (150) mit Dauerstrom und eine nichtsupraleitende Spule (160) aufweist, wobei der Rotor (120) in einen kalten Teil (123) und einen warmen Teil (124) unterteilt ist, wobei die beiden Teile durch eine Isoliertrennwand (126) getrennt sind, wobei die nichtsupraleitende Spule (160) des Rotors (120) mit der Hauptstatorspule (130) und der Steuerstatorspule (140) wechselwirkt, während die Hauptstatorspule (130) mit der Supraleiterspule (150) und der nichtsupraleitenden Spule (160) des Rotors (120) wechselwirkt, des Weiteren aufweisend einen Kryokühler (170), der ein Kühlgas zu dem kalten Teil (123) des Rotors (120) liefert, des Weiteren aufweisend eine Flusspumpe (180), die den Dauerstrom in die Supraleiterspule (150) des Rotors (120) induziert,
wobei das Verfahren Folgendes aufweist:
Kühlen (510) der Supraleiterspule (150) des Rotors (120) mit dem Kryokühler (170), bis eine Temperatur der Wicklungen der Supraleiterspule (150) des Rotors (120) eine supraleitende Betriebstemperatur erreicht;
Bereitstellen (515) eines Flusses zu der Supraleiterspule (150) durch die Flusspumpe (180), bis ein Dauerstrom, der durch die Wicklungen der Supraleiterspule (150) des Rotors (120) fließt, einen Dauerbetriebsstrom erreicht;
Empfangen (520) eines Wechselstromeingangs durch die Hauptstatorspule (130) von einer Leistungsverteilungsbusleitung (192);
Empfangen (525) eines Steuerstroms durch die Steuerstatorspule (140) von der Steuerung (194);
Erzeugen (530) eines rotierenden Magnetfelds durch einen Wechselstrom innerhalb der Hauptstatorspule (130);
Elektrisches Wechselwirken (535) des rotierenden Magnetfelds mit dem Dauerstrom der Supraleiterspule (150) des Rotors (120);
Erzeugen (540) eines elektromagnetischen Drehmoments durch das Wechselwirken des rotierenden Magnetfelds mit dem Dauerstrom, um den Rotor (120) zu drehen;
Erzeugen (545) eines Stroms durch die Steuerstatorspule (140) an der nichtsupraleitenden Spule (160) des Rotors (120);
Modulieren (550) eines Magnetfelds, das durch den Strom der nichtsupraleitenden Spule (160) des Rotors (120) erzeugt wird, mit einem Magnetfeld, das durch den Wechselstrom der Hauptstatorspule (130) erzeugt wird;
Variieren (555) von zumindest einem von Betrag, Phase oder Frequenz einer Kombination aus dem rotierenden Magnetfeld der Hauptstatorspule (130) und dem Magnetfeld der nichtsupraleitenden Spule (160) des Rotors (120) im Vergleich zu zumindest einem von Betrag, Phase oder Frequenz des allein durch die Hauptstatorspule (130) erzeugten rotierenden Magnetfelds zur Steuerung einer Drehzahl des Rotors (120),
wobei ein von der Steuerstatorspule (140) in die nichtsupraleitende Spule (160) des Rotors (120) induzierter Steuerstrom die nichtsupraleitende Spule (150) steuert, um eine von folgenden Wirkungen zu erzielen: Verstärken einer durch die Supraleiterspule (150) des Rotors (120) in der Hauptstatorspule (130) erzeugten Spannung, Unterdrücken der durch die Supraleiterspule (150) des Rotors (120) in der Hauptstatorspule (130) erzeugten Spannung oder Ändern einer Phase der durch die Supraleiterspule (150) des Rotors (120) in der Hauptstatorspule (130) erzeugten Spannung.

13. Verfahren nach Anspruch 12, wobei die Hauptstatorspulenanschlüsse der Hauptstatorspule (130) mit der Leistungsverteilungsbusleitung (192) verbunden sind.

14. Verfahren nach einem der Ansprüche 12 bis 13, wobei die Steuerstatorspulenanschlüsse der Steuerstatorspule (140) mit der Steuerung (194) verbunden sind.

15. Verfahren nach Anspruch 12, des Weiteren aufweisend: Erkennen eines Kurzschlusses in der Hauptstatorspule (130); Induzieren eines Steuerstroms durch die Steuerstatorspule (140) in die nichtsupraleitende Spule (160) des Rotors (120) derart, dass der Fluss von der nichtsupraleitenden Spule (160) des Rotors (120), der in einen kurzgeschlossenen Teil der Hauptstatorspule (130) eintritt, entgegengesetzt zu dem Fluss von der Supraleiterspule (150) des Rotors (120) ist, der in den kurzgeschlossenen Teil der Hauptstatorspule (130) eintritt; und gleichzeitiges Verringern des Dauerstroms in der Supraleiterspule (150) des Rotors (120) durch die Flusspumpe (180), bis der Dauerstrom in der Supraleiterspule (150) des Rotors (120) auf null reduziert ist, und Anpassen des Steuerstroms in der Steuerstatorspule (140), um weiterhin den Fluss von der Supraleiterspule (150) des Rotors (120), der in den kurzgeschlossenen Teil der Hauptstatorspule (130) eintritt, aufzuheben.

## Revendications

1. Procédé (400) de fonctionnement d'un dispositif moteur/générateur (M/G) à rotor bobiné hybride (200) fonctionnant en mode générateur, dans lequel le dispositif moteur/générateur (M/G) à rotor bobiné hybride (200) comprend un stator (110) ayant une bobine de stator principale (130) et une bobine de stator de commande (140) connectée à un dispositif de commande (194), ainsi qu'un rotor (120) ayant une bobine supraconductrice à courant persistant (150) et une bobine non supraconductrice (160), le rotor (120) étant divisé en une partie froide (123) et une partie chaude (124), les deux parties étant séparées par une cloison isolante (126), dans lequel la bobine non supraconductrice (160) du rotor (120) interagit avec la bobine de stator principale (130) et la bobine de stator de commande (140) tandis que la bobine de stator principale (130) interagit avec la bobine supraconductrice (150) et la bobine non supraconductrice (160) du rotor (120), comprenant en outre un refroidisseur cryogénique (170) fournissant un gaz de refroidissement à la partie froide (123) du rotor (120), comprenant en outre une pompe à flux (180) induisant le courant persistant dans la bobine supraconductrice (150) du rotor (120), le procédé (400) comprenant :
le refroidissement (410), avec le refroidisseur cryogénique (170), de la bobine supraconductrice (150) du rotor (120) jusqu'à ce qu'une température d'enroulements de la bobine supraconductrice (150) soit à une température de fonctionnement supraconductrice ;
la fourniture (415), par la pompe à flux (180), d'un flux à la bobine supraconductrice (150) jusqu'à ce qu'un courant persistant circulant à travers les enroulements de la bobine supraconductrice (150) soit au niveau d'un courant de fonctionnement persistant ;
la réception (420), en provenance d'un arbre (190) d'un moteur principal (295), d'un couple pour faire tourner le rotor (120) ;
la génération (425), par le courant persistant de la bobine supraconductrice (150), d'un champ magnétique rotatif ;
l'interaction électrique (430), par la bobine supraconductrice (150), avec la bobine de stator principale (130) du stator (110) à travers le champ magnétique rotatif ;
la génération (435), à travers le champ magnétique rotatif de la bobine supraconductrice (150) du rotor (120) couplée à la bobine de stator principale (130), d'une force électromotrice (EMF) à l'intérieur de la bobine de stator principale (130) ;
la réception (440), par la bobine de stator de commande (140) du stator (110), d'un courant provenant du dispositif de commande (194) ;
l'interaction électrique (445), par la bobine de stator de commande (140), avec la bobine non supraconductrice (160) du rotor (120) ;
l'induction (450), par un champ magnétique d'un courant de la bobine de stator de commande (140), d'un courant de commande à l'intérieur de la bobine non supraconductrice (160) du rotor (120) ;
la génération (445), par le courant de commande à l'intérieur de la bobine non supraconductrice (160) du rotor (120), d'un champ magnétique pour un couplage avec la bobine de stator principale (130) ;
la modulation (460), par le champ magnétique produit par le courant de commande à l'intérieur de la bobine non supraconductrice (160) du rotor (120), d'un champ magnétique produit par la bobine supraconductrice (150) du rotor (120) ;
la variation (465) d'au moins une parmi une amplitude, une phase ou une fréquence d'une combinaison de champs magnétiques rotatifs de la bobine supraconductrice (150) et de la bobine non supraconductrice (160) du rotor (120) par rapport à au moins une parmi une amplitude, une phase ou une fréquence du champ magnétique produit par la bobine supraconductrice (150) du rotor (120) seule pour commander au moins une parmi une magnitude, une phase ou une fréquence d'une tension de sortie,
dans lequel un courant de commande induit par la bobine de stator de commande (140) dans la bobine non supraconductrice (160) du rotor (120) commande la bobine non supraconductrice (150) pour obtenir l'un des résultats suivants : le renforcement d'une tension produite dans la bobine de stator principale (130) par la bobine supraconductrice (150) du rotor (120), la suppression de la tension produite dans la bobine de stator principale (130) par la bobine supraconductrice (150) du rotor (120), ou la modification d'une phase de la tension produite dans la bobine de stator principale (130) par la bobine supraconductrice (150) du rotor (120).

2. Procédé selon la revendication 1, dans lequel la bobine de stator principale (130) est connectée à un bus de distribution d'énergie (192) et lui fournit de l'énergie électrique.

3. Procédé selon l'une quelconque des revendications 1 à 2, dans lequel la bobine de stator de commande (140) reçoit au moins un signal de commande (198) provenant d'un dispositif de commande de système (196).

4. Procédé selon l'une quelconque des revendications 1 à 3, dans lequel la tension de sortie est fournie aux bornes de bobine de stator principale (131).

5. Procédé selon l'une quelconque des revendications 1 à 4, dans lequel lorsque la bobine supraconductrice (150) réalise au moins l'une des actions suivantes :
interagit électriquement avec la bobine de stator principale (130), la bobine supraconductrice (150) agissant comme une source constante de flux magnétique ;
interagit électriquement principalement de manière synchrone avec la bobine de stator principale (130) ; et
interagit électriquement de manière asynchrone avec la bobine de stator principale (130).

6. Procédé selon l'une quelconque des revendications 1 à 5, dans lequel chacune de la bobine de stator principale (130) et de la bobine de stator de commande (140) est une bobine supraconductrice ou non supraconductrice.

7. Procédé selon l'une quelconque des revendications 1 à 6, dans lequel la pompe à flux (180) est située axialement par rapport au rotor (120) ou radialement par rapport au rotor (120).

8. Procédé selon l'une quelconque des revendications 1 à 7, dans lequel le refroidisseur cryogénique (170) est situé sur le rotor (120) ou est fixe.

9. Procédé selon l'une quelconque des revendications 1 à 8, dans lequel le procédé comprend en outre au moins l'une des étapes suivantes :
l'alimentation, par des bagues collectrices (377), du refroidisseur cryogénique (170), lorsque le refroidisseur cryogénique (170) est situé sur le rotor (120) ; et
l'alimentation, par transfert d'énergie par induction, du refroidisseur cryogénique (170).

10. Procédé selon l'une quelconque des revendications 1 à 9, dans lequel le gaz de refroidissement s'écoule vers la partie froide (123) du rotor (120) qui comprend la bobine supraconductrice (150) via un passage (175), dans lequel le passage (175) relie le refroidisseur cryogénique (170) à un parmi un rayon extérieur du rotor (120) ou un axe de rotation du rotor (120).

11. Procédé selon la revendication 1, comprenant en outre la détection d'un courtcircuit dans la bobine de stator principale (130) ; l'induction, par la bobine de stator de commande (140), du courant de commande dans la bobine non supraconductrice (160) du rotor (120) de sorte qu'un flux provenant de la bobine non supraconductrice (160) du rotor (120) entrant dans une partie court-circuitée de la bobine de stator principale (130) soit opposé au flux provenant de la bobine supraconductrice (150) du rotor (120) entrant dans la partie court-circuitée de la bobine de stator principale (130) ; et la diminution simultanée, par la pompe à flux (180), du courant persistant dans la bobine supraconductrice (150) du rotor (120) jusqu'à ce que le courant persistant dans la bobine supraconductrice (150) du rotor (120) soit réduit à zéro, et de l'ajustement du courant de commande dans la bobine de stator de commande (140) pour continuer à annuler le flux de la bobine supraconductrice (150) du rotor (120) entrant dans la partie court-circuitée de la bobine de stator principale (130).

12. Procédé de fonctionnement d'un dispositif moteur/générateur (M/G) à rotor bobiné hybride (100) fonctionnant en mode moteur,
dans lequel le dispositif moteur/générateur (M/G) à rotor bobiné hybride (100) comprend un stator (110) ayant une bobine de stator principale (130) et une bobine de stator de commande (140) connectée à un dispositif de commande (194), ainsi qu'un rotor (120) ayant une bobine supraconductrice à courant persistant (150) et une bobine non supraconductrice (160), dans lequel le rotor (120) est divisé en une partie froide (123) et une partie chaude (124), les deux parties étant séparées par une cloison isolante (126), dans lequel la bobine non supraconductrice (160) du rotor (120) interagit avec la bobine de stator principale (130) et la bobine de stator de commande (140) tandis que la bobine de stator principale (130) interagit avec la bobine supraconductrice (150) et la bobine non supraconductrice (160) du rotor (120), comprenant en outre un refroidisseur cryogénique (170) fournissant un gaz de refroidissement à la partie froide (123) du rotor (120), comprenant en outre une pompe à flux (180) induisant le courant persistant dans la bobine supraconductrice (150) du rotor (120), le procédé comprenant :
le refroidissement (510), avec le refroidisseur cryogénique (170), de la bobine supraconductrice (150) du rotor (120) jusqu'à ce qu'une température d'enroulements de la bobine supraconductrice (150) du rotor (120) soit à une température de fonctionnement supraconductrice ;
la fourniture (515), par la pompe à flux (180), d'un flux à la bobine supraconductrice (150) jusqu'à ce qu'un courant persistant circulant à travers les enroulements de la bobine supraconductrice (150) du rotor (120) soit au niveau d'un courant de fonctionnement persistant ;
la réception (520), par la bobine de stator principale (130), d'une entrée de courant alternatif provenant d'un bus de distribution d'énergie (192) ;
la réception (525), par la bobine de stator de commande (140), d'un courant de commande provenant du dispositif de commande (194) ;
la génération (530), par un courant alternatif à l'intérieur de la bobine de stator principale (130), d'un champ magnétique rotatif ;
l'interaction électrique (535), par le champ magnétique rotatif, avec le courant persistant de la bobine supraconductrice (150) du rotor (120) ;
la génération (540), par le champ magnétique rotatif interagissant avec le courant persistant, d'un couple électromagnétique pour faire tourner le rotor (120) ;
la génération (545), par la bobine de stator de commande (140), d'un courant au niveau de la bobine non supraconductrice (160) du rotor (120) ;
la modulation (550), par un champ magnétique produit par le courant de la bobine non supraconductrice (160) du rotor (120), d'un champ magnétique produit par le courant alternatif de la bobine de stator principale (130) ;
la variation (555) d'au moins une parmi une amplitude, une phase ou une fréquence d'une combinaison du champ magnétique rotatif de la bobine de stator principale (130) et du champ magnétique de la bobine non supraconductrice (160) du rotor (120) par rapport à au moins une parmi une amplitude, une phase ou une fréquence du champ magnétique rotatif produit par la bobine de stator principale (130) seule pour commander une vitesse du rotor (120),
dans lequel un courant de commande induit par la bobine de stator de commande (140) dans la bobine non supraconductrice (160) du rotor (120) commande la bobine non supraconductrice (150) pour obtenir l'un des résultats suivants : le renforcement d'une tension produite dans la bobine de stator principale (130) par la bobine supraconductrice (150) du rotor (120), la suppression de la tension produite dans la bobine de stator principale (130) par la bobine supraconductrice (150) du rotor (120) ou la modification d'une phase de la tension produite dans la bobine de stator principale (130) par la bobine supraconductrice (150) du rotor (120).

13. Procédé selon la revendication 12, dans lequel les bornes de bobine de stator principale de la bobine de stator principale (130) sont connectées au bus de distribution d'énergie (192).

14. Procédé selon l'une quelconque des revendications 12 à 13, dans lequel les bornes de bobine de stator de commande de la bobine de stator de commande (140) sont connectées au dispositif de commande (194).

15. Procédé selon la revendication 12, comprenant en outre la détection d'un courtcircuit dans la bobine de stator principale (130) ; l'induction, par la bobine de stator de commande (140), du courant de commande dans la bobine non supraconductrice (160) du rotor (120) de sorte qu'un flux provenant de la bobine non supraconductrice (160) du rotor (120) entrant dans une partie court-circuitée de la bobine de stator principale (130) soit opposé au flux provenant de la bobine supraconductrice (150) du rotor (120) entrant dans la partie court-circuitée de la bobine de stator principale (130) ; et la réalisation simultanée de la diminution, par la pompe à flux (180), du courant persistant dans la bobine supraconductrice (150) du rotor (120) jusqu'à ce que le courant persistant dans la bobine supraconductrice (150) du rotor (120) soit réduit à zéro, et de l'ajustement du courant de commande dans la bobine de stator de commande (140) pour continuer à annuler le flux de la bobine supraconductrice (150) du rotor (120) entrant dans la partie court-circuitée de la bobine de stator principale (130).
